# EUROPEAN PATENT SPECIFICATION

(11) **EP 1 924 835 B1**
(45) Date of publication and mention of the grant of the patent: **08.05.2013**
(21) Application number: 06796278.7
(22) Date of filing: 06.09.2006
(51) Int. Cl.: G01N 1/34

(54) **AUTOMATIC SOLID PHASE MICROEXTRACTION (SPME) SAMPLING APPARATUS**
AUTOMATISCHE SPME (SOLID PHASE MICROEXTRACTION)-PROBENNAHMEVORRICHTUNG
APPAREIL D'ECHANTILLONNAGE PAR MICROEXTRACTION EN PHASE SOLIDE (SPME) AUTOMATIQUE

(30) Priority: 16.09.2005 IT FI20050194
(43) Date of publication of application: 28.05.2008
(73) Proprietor: DEGLI ESPOSTI, Filippo, 59100 Prato (IT); DUGHERI, Vittorio, 51036 Larciano (IT)
(72) Inventor: DEGLI ESPOSTI, Filippo, 59100 Prato (IT); DUGHERI, Vittorio, 51036 Larciano (IT)
(74) Representative: Brazzini, Silvia
(86) International application number: PCT/IT2006/000642
(87) International publication number: WO 2007/032039

(56) References cited:
- GB-A- 2 401 174
- US-A1- 2004 025 302
- US-A1- 2005 011 831

## Description

### Field of the invention

The present invention relates in general to the field of the instrumentation for chemical analyses, especially those carried out through gas chromatographic apparatuses. In particular, the invention concerns an automatic solid phase microextraction (SPME) sampling apparatus.

### Description of the prior art

As is known, solid phase microextraction (SPME) is an analytical method that uses a fused silicon fiber on which a fluid polymer phase or a solid adsorbent, or a combination of the two, has been immobilized. The coated fiber (hereinafter called the SPME fiber) is immersed in a liquid sample, or in the headspace above the sample, to absorb the analytes of interest, which are subsequently desorbed with the aid of heat in the gas chromatograph injector and thus transferred to the capillary column. The method's selectivity can be varied by changing the type of phase coating the fiber, or its thickness. This analytical method has becomei widespread in various sectors, and is used for biological and environmental analyses, toxicology and in the agro-food sector.

An SPME unit essentially consists of two parts: a probe composed of coated fused silicon fiber attached at one end to a plastic connector and slidingly housed in a needle to enable the opposite end to be exposed, and a tubular container looking substantially like a syringe, complete with a plunger onto which the fiber's connector is screwed. The sliding action of the plunger makes a larger or smaller portion of the fiber extend from, or withdraw inside, the needle. The analyte can be extracted by exposing the coated portion of fiber in the headspace of a test tube, or by immerging it in a fluid (e.g. water, milk, fruit juices, wines, etc.), or by exposing the fiber to air (e.g. in a working environment where the concentration of airborne pollutants needs to be measured). US 2005/0011831 describes a device for carrying out an SPME analysis.

Three types of probe container (hereinafter called holders) are available, i.e. holders for manual analyses, for field tests and for automatic samplers (autosamplers). An autosampler is a well-known apparatus equipped with a robotic arm, which enables the maneuvers for extracting the analyte (sampling) and injecting it in the gas chromatograph to be performed automatically, while the operator has to take action each time the coated fiber has to be replaced, depending on the class of compounds being assayed, which may call for different phases to be immobilized on the fiber. In such cases, the samples to be analyzed can be contained in test tubes inserted in suitable supporting plates accessible to the sampling head of the robotic arm.

Using the SPME method, the automation of the extraction/injection procedure is limited because the operator has to take action every time the probe installed on the autosampler arm needs to be changed. There are situations, moreover, in which the probe has to be replaced after each injection in the gas chromatograph. For instance, automated analysis is not feasible for determining airborne pollutants when, during a given sampling campaign, the technician appointed to collect the samples is likely to return to the laboratory with a large number of probes whose fibers have been exposed to the environment being monitored. In this type of analysis, the number of fibers depends on the chosen number of sampling points in the area being monitored, and on the number of people working in the area. One or more probes may be attached to the workers' clothes in order to assess the personnel's exposure to more than one pollutant.

In environmental analyses, each SPME probe is the equivalent of a test-tube that operators must currently always change inside the holder before they can inject the sample into the gas chromatograph. Using the holders currently available on the market, SPME fibers can be used on some autosamplers, but several fibers cannot be used simultaneously in a single working session unless the autosampler is stopped and an operator is on hand to change the probe. For environmental analyses, moreover, where each fiber represents a given sampling point, there is no difference - in terms of timesaving - between injecting the analyte through the port by hand or installing the fiber in the holder in the autosampler. This represents a serious drawback of the SPME method because, if, for instance, there are two sets of samples on which two substances have to be assayed, which requires the use of two different SPME fibers, then the first set of samples has to be analyzed first, then the fiber has to be changed before the second set of samples can be analyzed. This problem is already important when it comes to assays on liquid or biological samples, but is further amplified in the case of environmental sampling, when the lack of a fully automated procedure considerably extends the time it takes to perform the analyses.

### Objects and summary of the Invention

The object of the present invention is to provide an automatic sampling apparatus for use in solid phase microextraction (SPME) that enables the automatic replacement of the SPME probes on the autosampler arm.

Another object of the present invention is to provide an apparatus of the aforesaid type that enables the SPME fiber on the autosampler arm to be changed in a manner that can also be readily integrated in sampling equipment already in use, simply by adding some further components.

A further object of the present invention is to provide an SPME probe suitable for use in an automatic sampling apparatus of the aforesaid type.

These objects are achieved by the automatic solid phase microextraction (SPME) sampling apparatus according to the present invention, the main features of which are stated in the independent claims.

Further important characteristics are stated in the dependent claims.

### Brief description of the drawings

Other characteristics and advantages of the automatic solid phase microextraction (SPME) sampling apparatus according to the present intervention will become apparent from the following description of an embodiment thereof provided here as a non-limiting example with reference to the attached drawings, wherein:
- figure 1 is an overall perspective view of the apparatus according to the invention;
- figures 2 and 3 respectively show exploded and assembled perspective views of a probe with an SPME fiber according to the present invention;
- figure 4 shows a perspective view of the holder for the probe with the SPME fiber;
- figure 5 shows a perspective view of the holder of figure 4 complete with the probe and the SPME fiber;
- figure 6 shows a perspective view of a transfer bracket with a probe containing an SPME fiber installed thereon;
- figure 7 illustrates the positioning of the probe with the SPME fiber on the transfer station;
- figure 8 shows a side view of the step when the probe with the SPME fiber is loaded from the transfer station into the holder carried by the autosampler arm;
- figure 9 is a perspective view of the step illustrated in figure 8;
- figure 10 is a perspective view, seen from below, of a guide block on the head of the autosampler arm;
- figure 11 is a perspective view of another embodiment of the probe with an SPME fiber according to the invention;
- figure 12 is a perspective view of an another embodiment of the transfer station suitable for use with the probe with the SPME fiber of figure 11;
- figure 13 is a perspective view of the device for calibrating the probe;
- figure 14 is a perspective view of a protective container for the probe;
- figure 15 is an exploded perspective view of the protective container of figure 14 with the probe housed therein.

### Detailed description of the invention

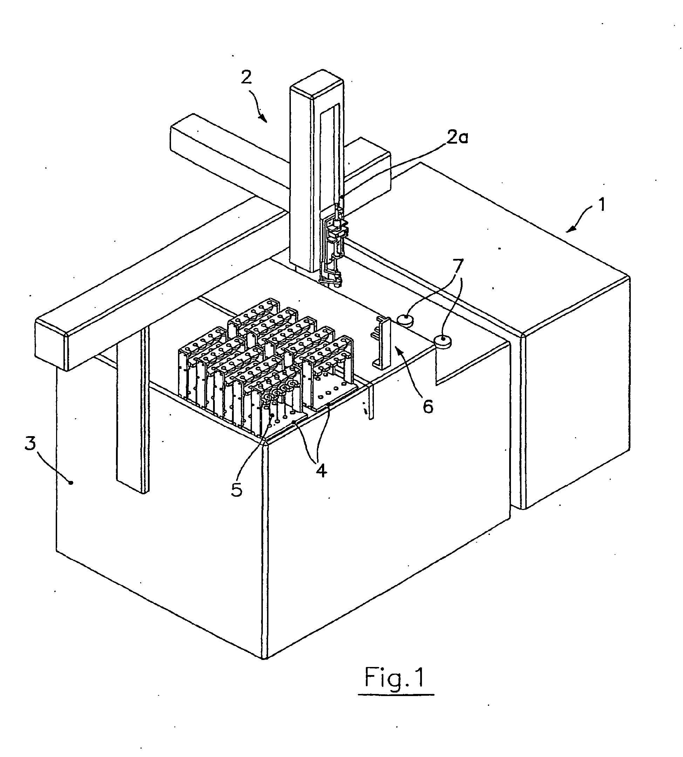

The apparatus according to the present invention is schematically shown in figure 1, in association with a detector for gas chromatographic analyses (a mass spectrometer, for example) generically indicated by the numeral 1 and comprises a robotic autosampler arm 2 supported by the gas chromatograph, on which one or more trays 4 for supporting the probes containing the SPME fibers (indicated by the numeral 5) are neatly arranged. These probes may, for instance, come from a campaign of environmental analyses and are ready for gas chromatographic analysis. Alongside the trays 4, there is a bracket for transferring the probes 5 (generically indicated by the numeral 6) that is described in more detail later on. The numeral 7 indicates two injectors of the gas chromatographic apparatus.

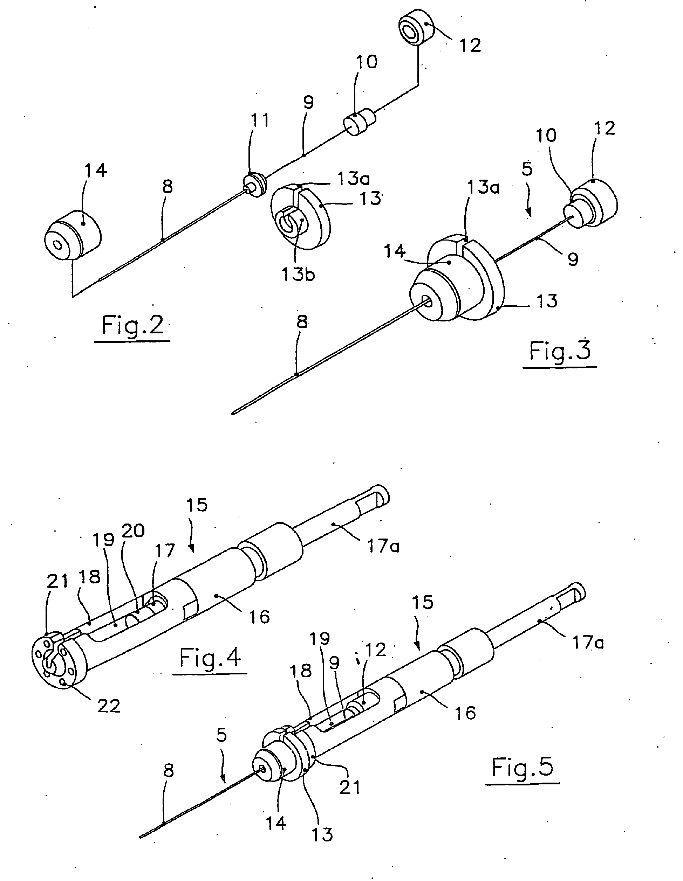

With reference to figures 2 and 3, the sampling probe 5 according to the present invention comprises a conventional probe consisting of a needle 8, which slidingly houses an SPME fiber 9. A plastic connector 10 is attached to one end of the fiber 9 and - in conventional systems - it is screwed to the probe holder's plunger. A brass spacer ring 11 is likewise attached to the adjacent end of the needle 8. An adapter cap 12 made of a ferromagnetic material is attached to the connector 10, while a flange 13 also made of a ferromagnetic material is fixed to the spacer ring 11. In particular, the flange 13 has a radial discontinuity 13a and a portion 13b that is threaded both internally and externally. To assemble the flange 13 on the spacer ring 11, the needle 8 is passed through the discontinuity 13a until it is coaxial to the flange 13, which is screwed onto the spacer ring 11 by means of its threaded portion 13b until the two are juxtaposed. Then a fixing sleeve 14 is screwed onto the threaded portion 13b coaxially to the needle 8.

As shown in figures 4 and 5, the numeral 15 identifies a holder of substantially conventional structure, suitable for attaching to the head 2a of the sampler arm 2 to carry the probe 5 with the SPME fiber 9. The holder 15 comprises a tubular body 16 slidingly containing a plunger 17, the stem 17a of which is connected to a moving device, not shown because it is of a type well-known to a person skilled in the art. The body 16 of the holder 15 has a longitudinal window 18 affording access to a chamber 19 containing the probe 5 during its movement, as shown in figure 5, so that the needle 8 extends axially therefrom. In particular, a magnet 20 is attached to the end of the plunger 17 inside the chamber 19 (figure 4); likewise, a flange 21 carrying a circularly arranged row of magnetic elements 22 is attached to the free end of the body 16. Both the flange 21 and the free end of the body 16 have a radial discontinuity to allow for the passage of the needle 8 when the probe 5 is placed inside the chamber 19 (as shown in figure 5) or removed therefrom. In the condition shown in figure 5, the probe 5 is secured to the holder 15 by the two magnetic connections consisting, on one side, of the adaptor cap 12, which becomes attached to the magnet 20 situated at the end of the plunger 17, and, on the other side, of the flange 13, which becomes attached to the magnetic flange 21 situated at the free end of the body 16.

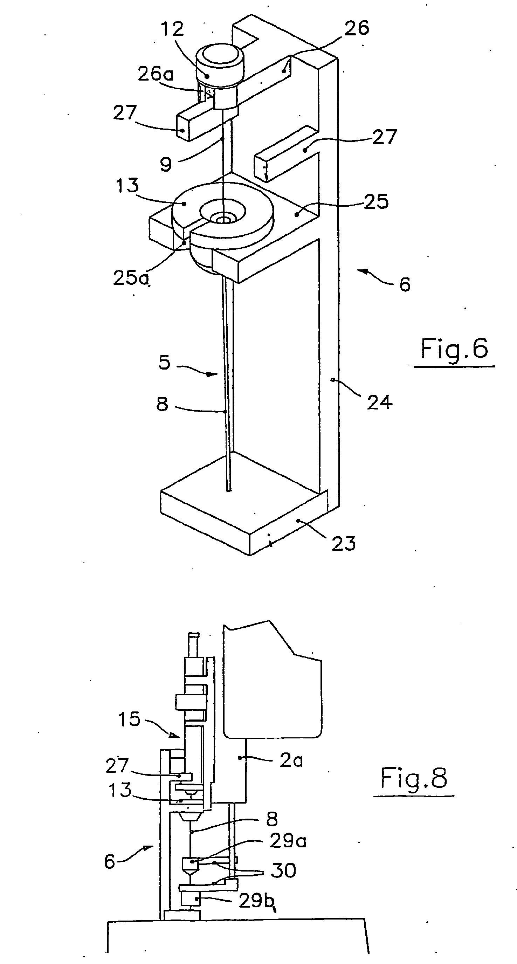

As shown in figure 6, the bracket 6 for transferring the probes 5 carrying the SPME fibers comprises a base 23, which can be fixed to the casing 3 of the apparatus, and an upright 24 rising the base 23. First and a second supporting plates, 25 and 26, extend from the upright 24 over the base 23 and are intended to engage the adaptor cap 12 and the flange 13 on the probe 5 carrying the SPME fiber 9 in their respective seats 25a and 26a. Between the first and the second supporting plates 25 and 26 a pair of arms 27 also extends from the upright 24, the purpose of which will be explained later on.

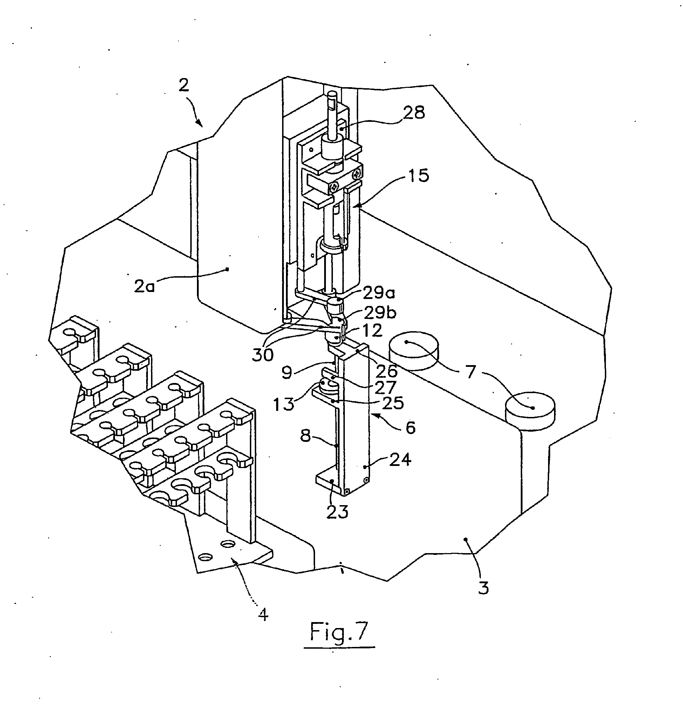

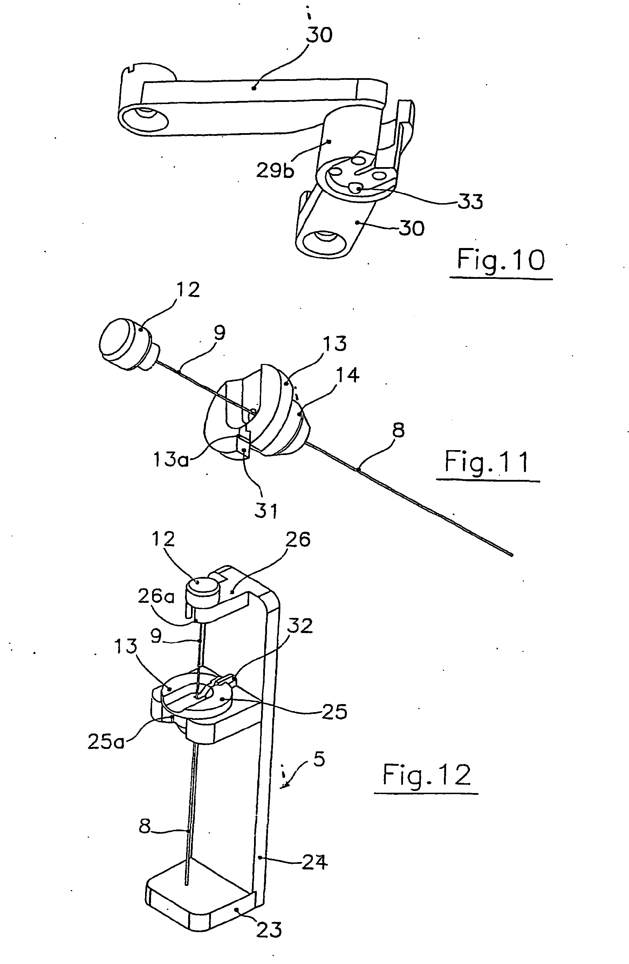

As shown in figure 7, the holder 15 is fixed in a substantially conventional manner to the head 2a of the autosampler arm 2 by means of a plate 28. The head 2a of the autosampler arm 2 is also provided with two guide blocks 29a, 29b for guiding the needle 8 of the probe 5, in alignment underneath the holder plate 28 and supported by arms 30 extending from said plate 28. Moreover, as shown in figure 10, the lower of the two guide blocks, indicated by the numeral 29b, carries a circularly arranged row of magnets 33 on its underside so that it can be magnetically coupled with the adaptor cap 12 on the SPME fiber 9.

The operation of the apparatus according to the invention is described below with particular reference to figures 7, 8 and 9. Initially, the probes 5 - coming, for instance, from a campaign of environmental analyses - are placed vertically in suitable racks in the tray 4, while the head 2a of the sampler arm 2 is in its resting position shown in figure 1. The sampler arm 2 is characterized by a Cartesian type of movement controlled by a computer (not shown), in which a map of the tray 4 with the position of each probe is stored, so that it can move into position over the probes 5 on the tray 4 and align the guide blocks 29a, 29b over the required probe 5. Then a downward movement begins until the lower guide block 29b magnetically engages the adaptor cap 12 of the prefixed probe, which can consequently be lifted from its seat in the tray 4 and carried to the transfer bracket 6, where it is placed with the adaptor cap 12 and the flange 13 resting on the supporting plates 26 and 25, in the respective seats 26a and 25a. The end of the guide block 29b is separated from the adaptor cap 12 by sliding the guide block 29b longitudinally away from the transfer bracket 6. The cap 12 is kept in its seat by the plastic connector 10 projecting therefrom and is detached when the block 29b is moved away from the transfer bracket 6 and its magnets are no longer in contact with the cap 12.

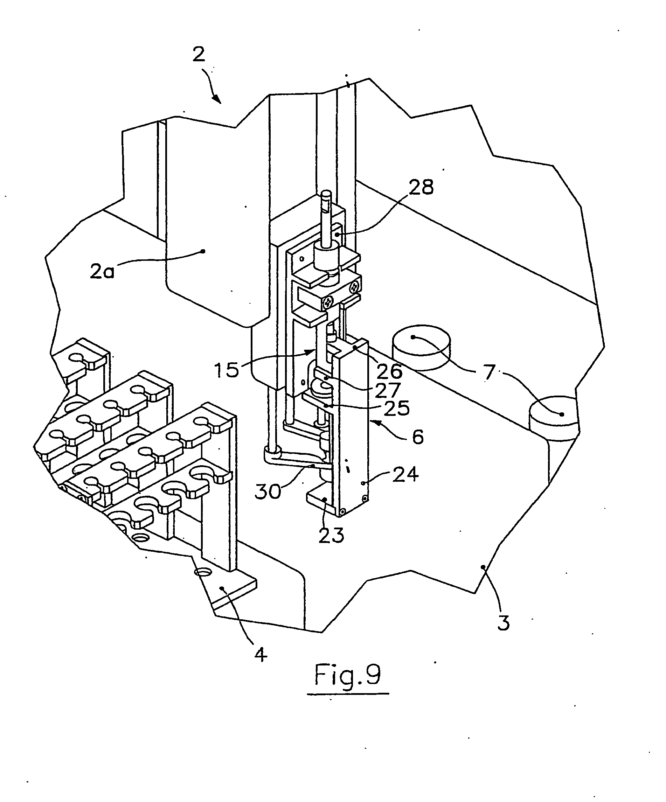

Once it has been separated from the probe 5, the head 2a of the arm 2 moves down to bring the window 18 in the holder 15 into line with the adaptor cap 12. A subsequent forward sliding movement of the head 2a moves the holder 15 towards the upright 24 until the adaptor cap 12 comes to be inside the chamber 19 in the holder 15, as shown in figures 8 and 9.

Then the plunger 17 brings its magnetic end 20 up against the adaptor cap 12, which remains attached thereto, after which the head 2a on the arm 2 moves to bring its magnetic flange 21 into contact with the flange 13 on the needle 8. The probe 5 thus becomes firmly attached to the holder 15 and can consequently be separated from the transfer bracket 6 and carried towards the injector 7, in which the needle 8 ultimately engages. At this stage, the needle 8 also engages in the guide blocks 29a, 29b to avoid it being bent during its insertion in the gas chromatograph injector 7.

Once the needle 8 is inserted in the injector 7, the process continues in the usual way: the fiber 9 in the needle 8 is exposed to enable the desorption of the substance being analyzed and, when the necessary time has elapsed, the needle 8 is withdrawn from the injector 7 and the probe 5 is returned to the transfer bracket 6, where it is repositioned as shown in figure 9. The probe is detached by raising the plunger 17 in the holder until the magnet 20 is separated from the adaptor cap 12 when it abuts against the top of the window 18. Then the holder pulls the probe upwards until the flange 13 abuts against the arms 27 with sufficient force to overcome the magnetic force between the magnetic flange 21 and the flange 13, so that the probe 5 drops freely down the bracket 6 until the cap 12 and the flange 13 fit into their respective seats 26a and 25a in the plates 26 and 25. Then the previously-described sample collection steps are conducted in reverse order until the probe 5 is restored to its seat in the tray 4 and the autosampler arm 2 is ready to collect a new probe 5.

According to the present invention, there are essentially two different ways for the mobile sampler arm to collect the probe. The first mode involves the probe being connected to the head of the arm by means of its adapter cap 12, which becomes magnetically attached to the lower end of the guide block 29b, and enables the positioning of the probe on the transfer bracket 6 and its detachment therefrom. The second mode involves the probe being connected to the holder 15 by means of the adapter cap 12 and the flange 13, which are magnetically attached respectively to the end of the plunger 17a and to the free end of the body 16 of the holder 15, and enables the transfer of the probe from the transfer bracket to the holder and its subsequent reinsertion in said bracket. The passage from one collecting mode to the other, due to the movements of the mobile arm 2 and the presence of the transfer bracket 6, enables the procedure for analyzing a plurality of samples to be fully automated.

The apparatus according to the invention can be used advantageously not only to perform analyses using probes containing already exposed SPME fibers, but also for the direct extraction of analytes of interest from samples contained in test tubes placed in the tray and their subsequent desorption in the gas chromatograph. In this case, according to a sequence that, in view of what has been explained above, is self-evident to person skilled in the art, the head 2a of the autosampler arm carrying a probe 5 that has yet to be exposed is brought over a given test tube in the tray 4 and inserts the needle in the test tube, by making the plunger 17 slide inside the holder 15. Here again, the needle 8 is engaged in the two guide blocks 29a, 29b to avoid any risk of it bending due to the force exerted by the plunger on the needle during its insertion in the test-tube. Once the SPME fiber is exposed inside the test-tube for the required time, it is withdrawn inside the needle, which is removed from the test-tube, then the probe is transferred to the gas chromatograph injector, where it is inserted and the desorption phase begins.

If the analytes to assay belong to different classes of compounds and consequently require fibers with different phases, the apparatus according to the invention can automatically fit the appropriate unexposed probe, collecting it from the tray 4 after depositing the previously-used probe. The changeover is made using the transfer bracket 6 in the previously-described manner.

In the above-described embodiment, the probe 5 is detached from the flange 21 by the pair of arms 27 up against which the probe's flange 13 is forced until the force developed exceeds the magnetic force between the latter and the flange 21. In the alternative embodiment illustrated in figures 11 and 12, the probe 5 is detached from the guide block 29b in the same way, while the flange 21 is separated from the flange 13 by the simple traction exerted by the head 2a in an orthogonal direction away from the needle 8. For this purpose, the radial discontinuity 13a on the flange 13, for inserting the needle 8, has a widened opening section 31. There is a corresponding reference tooth 32 on the plate 25 of the transfer bracket 6 for engaging in said widened opening section 31 so that, while the probe is kept in a constant position on the transfer bracket, it can be detached by radial traction without any risk of the probe sliding out because the flange 13 and the adapter cap abut laterally on their respective seats. This solution also avoids the probe being positioned by dropping it onto the transfer bracket, which could damage the probe.

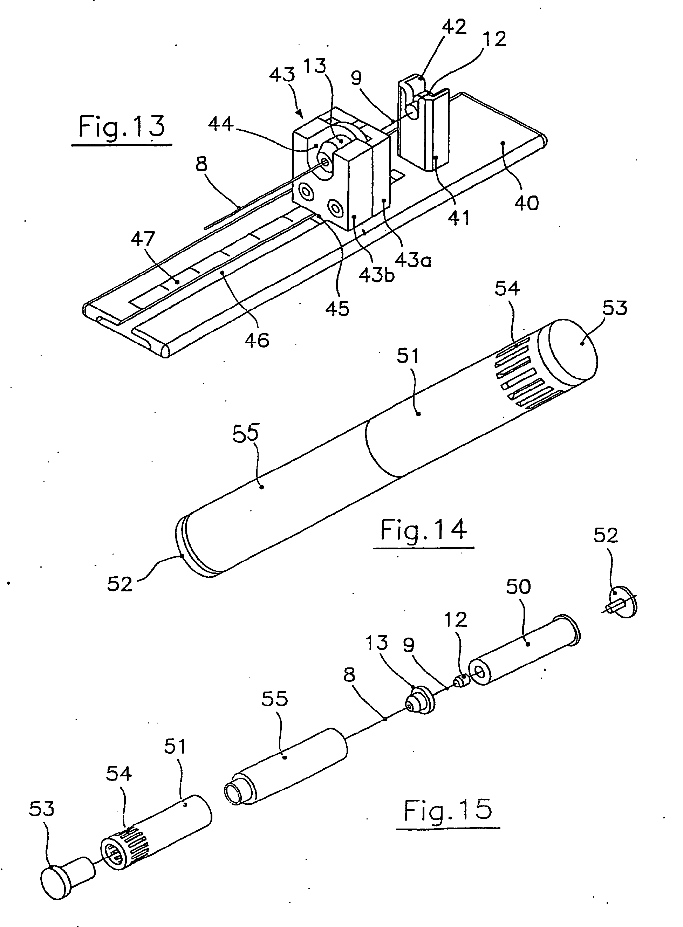

Figure 13 shows a useful accessory for the apparatus according to the invention, for use in calibrating the probe, i.e. for adjusting the extent to which the fiber is withdrawn inside the needle, normally indicated as Z. This parameter determines the extent of exposure of the fiber and the consequent sampling range. The device comprises a plate 40 with a first block 41 fixed in a median longitudinal position, which has a first seat 42 shaped so as to contain the adaptor cap 12 on the probe, and a second movable block 43 consisting of two coupled parts 43a and 43b that, between them, define a second seat 44 shaped so as to contain the flange 13 on the probe and to prevent its axial sliding therein. At least one of the two blocks has a T-shaped appendage 45 engaged inside a slot 46 of corresponding shape formed longitudinally on the plate 40. Once the probe is placed on the two blocks 41 and 43 so that it lies parallel to the plate 40, with the adaptor cap 12 and the flange 13 engaged in their respective seats 42 and 44, the block 43 can be made to slide in relation the block 41 to obtain the required adjustment. The extent of the probe's withdrawal can be read on a suitable scale 47 provided on the plate 40, as schematically shown.

Figure 14 shows a protective container for use with the SPME fiber probe and the apparatus according to the invention, which enables sampling to be done in the field and on workers without any risk of damaging the SPME fiber. This container comprises two cylindrical elements 50 and 55, which surround the fiber and prevent any movement of the flange 13 or adaptor cap 12 so as to avoid the length Z of the fiber changing during the sampling procedure. The element 50 engages inside the element 55 so that the flange 13 rests up against the bottom of the latter, and the end of the element 50 comes up against the flange 13. The element 55 partially engages in a further tubular element 51, which protects the needle during the fiber sampling and transport. The element 51 has slits 54 to enable the fiber to come into contact with the flow of air in the environment being analyzed, without creating a second diffusion chamber (which would falsify the value of the sampling range). There are also caps 52 and 53 to use after completing the sampling procedure in order to interrupt the fiber's absorption and enable its transportation in a safer way.

The above description clearly shows that the apparatus according to the invention fully achieves the previously-stated objects. In particular, it enables the full automation of the SPME analytical procedure, both when the gas chromatograph has to be fed with probes already exposed in other environments, and when the analyte has to be extracted from the contents of test tubes accessible to the sampler arm. This enables a drastic reduction in the action of the operator on the apparatus, also minimizing the risk of error. In addition, the time it takes to complete the analyses are reduced and the apparatus can even work continuously for several days without the operator needing to intervene.

Finally, the full automation of the procedure is enabled by means of simple structural changes to the conventional equipment, which means that all the necessary components can be supplied in the form of a kit for converting partially-automated apparatus already in use into the fully-automated apparatus according to the present invention.

A further advantage of the sampling apparatus and the relevant probe according to the invention consists in that they can be used not only to automatically feed exposed SPME fibers to a gas chromatographic apparatus, but also to perform automatic sampling in an unattended sampling station, e.g. for air analysis, wherein, at a certain time, a probe must be exposed in a sampling window and, after a prefixed time, stored back in a rack awaiting to be analyzed in a remote laboratory later on.

Various modifications and alterations to the invention may be done provided that they fall within the scope of the invention as defined by the following claims.

## Claims

1. A probe for solid phase microextraction (SPME) comprising an SPME fiber (9) slidingly housed in a needle (8), **characterized in that** said fiber has a ferromagnetic connection element (10,12) at one end, and the end of said needle in which said fiber is engaged has a flange (13) made of ferromagnetic material.

2. The probe according to claim 1, wherein said connection element on said fiber comprises a plastic connector (10) attached to one end of said fiber (9) and an adaptor cap (12) made of a ferromagnetic material attached to said connector (10).

3. The probe according to claims 1 or 2, wherein said ferromagnetic flange (13) on said needle is attached to a spacer ring (11) at the end of said needle by means of a sleeve (14) coaxial thereto.

4. The probe according to any of the claims 1-3, wherein said flange (13) has a lateral radial discontinuity (13a) to allow for the passage of said needle.

5. The probe according to claim 4, wherein said lateral radial discontinuity has a widened opening section (31).

6. An automatic solid phase microextraction (SPME) sampling apparatus using a probe (5) as described in claims 1-5 comprising an SPME fiber (9) arranged slidingly inside a needle (8) so that it can be exposed to an environment from which to absorb an analyte of interest and then inside a gas chromatographic injector (7) for the desorption of said analyte, one end of the SPME fiber (9) in said probe being fitted with a ferromagnetic connection element (10,12) and the end of said needle wherein said fiber is engaged having a ferromagnetic flange (13), said apparatus comprising an arm (2) movable according to a pre-established program, with a head (2a) carrying a substantially tubular holder (15) with a chamber (19) for said probe (5) and a plunger (17) in said holder for actuating the protrusion and withdrawal of at least a portion of said fiber (9), said apparatus also comprising a storage unit (4) of test tubes containing samples to analyze and/or probes with already-exposed SPME fibers, and optionally also fibers that have yet to be exposed, accessible to said movable arm (2), said apparatus being **characterized in that**:
- the plunger (17) in said holder (15) has at least one magnet (20) at the end interacting with said fiber, and one or more further magnets (22) provided at the free end of said holder;
- said head (2a) comprises at least a guide block (29a, 29b) for slidingly housing said needle (8) when said probe (5) is engaged in said holder (15), said guide block (29b) being arranged underneath the free end of said holder and fitted with at least one magnet (33) at its lower end;
- there is provided an intermediate transfer bracket (6) accessible to said mobile arm (2) and suitable for vertically supporting one probe (5), and comprising means (25, 26) for engaging said ferromagnetic connector on the SPME fiber and said ferromagnetic flange on said needle;
- the head (2a) of said movable arm (2) being suitable for collecting said probe (5) according to a first collection mode, by bringing the end of said guide block (29b) up against said ferromagnetic connection element (10, 12) on the SPME fiber, or according to a second collection mode, by bringing the end of said plunger (17) and the free end of said holder (15) respectively up against said connection element (10, 12) on the SPME fiber and the flange (13) on the needle, whereby said probe (5) is placed inside the chamber (19) of said holder (15) with the needle (8) extending axially therefrom;
- said first collection mode being used to transfer said probe (5) from said storage unit (4) to said intermediate transfer bracket (6) and vice versa, while said second collection mode is used to transfer said probe (5) from said intermediate transfer bracket (6) to said gas chromatograph injector (7) or to said storage unit (4) to absorb an analyte, as a result of corresponding movements of said mobile arm (2).

7. The apparatus according to claim 6, wherein said intermediate transfer bracket (6) comprises an upright (24) with two supporting elements (25, 26) extending therefrom, with respective coaxial seats (25a, 26a) in which the connection element (10,12) on the SPME fiber and the flange (13) on the needle are laterally engaged, each of said seats having a radial discontinuity suitable for the passage of said SPME fiber and said needle, respectively.

8. The apparatus according to claim 7, wherein a pair of parallel arms (27) extend from said upright (24) between said supporting elements (25, 26) said arms being intended for abutting on said flange of said needle so as to exert a force thereon that exceeds the magnetic force of attraction exerted by the magnet (22) on the free end of said holder (15) when said head (2a) is raised after the magnetic end (20) of the plunger (17) has been separated from said connection element (10,12) on the fiber.

9. The apparatus according to claims 6 or 7, wherein said flange (13) of said needle has a lateral radial slit (13a) and wherein a reference tooth (32) is provided on the respective supporting element (25) of said intermediate transfer bracket (6), on which the seat (25a) for said flange is formed, that engages in said slit, in said first collection mode said guide block (29b) being separated from said connection element (10,12) by said head (2a) moving orthogonally away from said probe (5).

10. The apparatus according to any of the previous claims, also comprising a device for adjusting the degree to which the fiber (9) is withdrawn inside said needle (8), comprising a supporting plate (40), a first block (41) fixed to said plate with a seat (42) for containing said connection element (10,12) of the fiber and a second block (43) sliding along said supporting plate with a seat (44) for containing said flange (13) on said needle, said supporting plate also comprising a graduated scale (47) along the axis in which said sliding block moves for adjusting the extent of said fiber's withdrawal to a pre-established value when said probe (5) is placed on said blocks.

11. The apparatus according to any of the previous claims, also comprising a protective container for said probe (5), consisting of a first tubular element (50) for containing the portion of SPME fiber extending from said flange (13), a second tubular element (55) in which said first tubular element (50) engages so as to bring said flange to rest up against the bottom of the second tubular member (55), and a third tubular element (51) in which said second tubular element (55) at least partially engages so that said needle (8) extends inside said third tubular element (51), slits (54) being formed on said third tubular element to place its interior in communication with the outside environment containing the substance being absorbed on the fiber.

## Patentansprüche

1. Sonde für SPME (solid phase microextraction), enthaltend eine SPME-Faser (9), die verschiebbar in einer Nadel (8) untergebracht ist, **dadurch gekennzeichnet, dass** die Faser an einem Ende ein ferromagnetisches Verbindungselement (10, 12) hat und das Ende der Nadel, in welchem die Faser eingreift, einen Flansch (13) hat, der aus ferromagnetischem Material besteht.

2. Sonde nach Anspruch 1, wobei das Verbindungselement an der Faser einen Kunststoffverbinder (10), der an einem Ende der Faser (9) angebracht ist, und eine aus einem ferromagnetischem Material bestehende Adapterkappe (12) enthält, die an dem Verbinder (10) angebracht ist.

3. Sonde nach Anspruch 1 oder 2, wobei der ferromagnetische Flansch (13) an der Nadel an einem Abstandsring (11) an dem Ende der Nadel mittels einer dazu koaxialen Hülse (14) angebracht ist.

4. Sonde nach einem der Ansprüche 1 bis 3, wobei der Flansch (13) eine seitliche radiale Unterbrechung (13a) hat, um den Durchgang der Nadel zu gestatten.

5. Sonde nach Anspruch 4, wobei die seitliche radiale Unterbrechung einen erweiterten Öffnungsquerschnitt (31) hat.

6. Automatische SPME- (solid phase microextraction) Probennahmevorrichtung, die eine Sonde (5) verwendet, wie sie in den Ansprüchen 1 bis 5 beschrieben ist, enthaltend eine SPME-Faser (9), die innerhalb einer Nadel (8) verschiebbar angeordnet ist, so dass sie einer Umgebung, von der ein interessierendes Analyt zu absorbieren ist, ausgesetzt werden und dann innerhalb eines Gaschromatographieinjektors (7) für die Desorption des Analyts sein kann, wobei ein Ende der SPME-Faser (9) in der Sonde mit einem ferromagnetischen Verbindungselement (10, 12) ausgestattet ist und das Ende der Nadel, worin die Faser in Eingriff ist einen ferromagnetischen Flansch (13) hat, wobei die Vorrichtung einen Arm (2) enthält, der gemäß einem voreingerichteten Programm beweglich ist, mit einem Kopf (2a), der einen im wesentlichen rohrartigen Halter (15) mit einer Kammer (19) für die Sonde (5) trägt, und einem Kolben (17) in dem Halter, um das Vorstehen und Zurückziehen wenigstens eines Teils der Faser (9) zu betreiben, wobei die Vorrichtung außerdem eine Speichereinheit (4) von Teströhren enthält, die zu analysierende Proben und/oder Sonden mit bereits freigelegten SPME-Fasern und optional auch Fasern beinhalten, die noch freizulegen sind, und für den beweglichen Arm zugänglich sind, wobei die Vorrichtung **dadurch gekennzeichnet ist, dass**
- der Kolben (17) in dem Halter (15) wenigstens einen Magneten (20) an dem Ende hat, das mit der Faser zusammenwirkt, und ein oder mehrere weitere Magneten (22) an dem freien Ende des Halters vorgesehen sind;
- der Kopf (2a) wenigstens einen Führungsblock (29a, 29b) zum verschiebbaren Aufnehmen der Nadel (8) enthält, wenn die Sonde (5) in dem Halter (15) in Eingriff ist, wobei der Führungsblock (29b) unterhalb des freien Endes des Halters angeordnet und mit wenigstens einem Magneten (33) an seinem unteren Ende ausgestattet ist;
- eine Zwischentransferklammer (6) vorgesehen ist, die für den beweglichen Arm (2) zugänglich und zum vertikalen Halten einer Sonde (5) geeignet ist und Einrichtungen (25, 26) zum Eingreifen in den ferromagntischen Verbinder an der SPME-Faser und den ferromagntischen Flansch an der Nadel enthält;
- der Kopf (2a) des beweglichen Arms (2) zum Aufnehmen der Sonde (5) gemäß einem ersten Aufnahmemodus, indem das Ende des Führungsblockes (29b) nach oben gegen das ferromagntische Verbindungselement (10, 12) an der SPME-Faser gebracht wird, oder gemäß einem zweiten Aufnahmemodus geeignet ist, indem das Ende des Kolbens (17) und das freie Ende des Halters (15) jeweils nach oben gegen das Verbindungselement (10, 12) an der SPME-Faser und den Flansch (13) an der Nadel gebracht wird, wodurch sich die Sonde (5) innerhalb der Kammer (19) des Halters (15) mit der Nadel (8) davon axial erstreckt;
- der erste Aufnahmemodus verwendet wird, um die Sonde (5) von der Speichereinheit (4) zu der Zwischentransferklammer (6) und umgekehrt zu transferieren, während der zweite Aufnahmemodus verwendet wird, um die Sonde (5) von der Zwischentransferklammer (6) zu dem Gaschromatographieinjektor (7) oder zu der Speichereinheit (4) zu transferieren, um ein Analyt zu absorbieren, als Ergebnis entsprechender Bewegungen des beweglichen Arms (2).

7. Vorrichtung nach Anspruch 6, wobei die Zwischentransferklammer (6) einen Ständer (24) mit zwei Halteelementen (25, 26) enthält, die sich davon erstrecken, mit jeweiligen koaxialen Sitzen (25a, 26a), in welchen das Verbindungselement (10, 12) an der SPME-Faser und der Flansch (13) an der Nadel seitlich in Eingriff sind, wobei jeder der Sitze eine radiale Unterbrechung hat, die für den Durchgang der SPME-Faser bzw. der Nadel geeignet ist.

8. Vorrichtung nach Anspruch 7, wobei sich ein Paar von parallelen Armen (27) von dem Ständer (24) zwischen den Halteelementen (25, 26) erstreckt, wobei die Arme vorgesehen sind, um an dem Flansch der Nadel anzuliegen, um eine Kraft darauf auszuüben, die die magnetische Anziehungskraft übersteigt, die durch den Magneten (22) auf das freie Ende des Halters (15) ausgeübt wird, wenn der Kopf (2a) angehoben wird, nachdem das magnetische Ende (20) des Kolbens (17) von dem Verbindungselement (10, 12) an der Faser getrennt wurde.

9. Vorrichtung nach Anspruch 6 oder 7, wobei der Flansch (13) der Nadel einen seitlichen radialen Schlitz (13a) hat und wobei ein Referenzzahn (32) an dem entsprechenden Halteelement (25) der Zwischentransferklammer (6) vorgesehen ist, woran der Sitz (25a) für den Flansch ausgebildet ist, der in den Schlitz eingreift, wobei in dem ersten Aufnahmemodus der Führungsblock (29b) von dem Verbindungselement (10, 12) getrennt wird, indem sich der Kopf (2a) orthogonal von der Sonde (5) weg beweget.

10. Vorrichtung nach einem der vorhergehenden Ansprüche, außerdem enthaltend eine Vorrichtung zum Einstellen des Grades, bis zu welchem die Faser (9) innerhalb der Nadel (8) zurück gezogen wird, enthaltend eine Halteplatte (40), einen ersten Block (41), der an der Platte befestigt ist, mit einem Sitz (42) zum Enthalten des Verbindungselementes (10, 12) der Faser, und einen zweiten Block (43), der längs der Halteplatte gleitet, mit einem Sitz (44) zum Enthalten des Flansches (13) an der Nadel, wobei die Halteplatte auch eine gestufte Skala (47) längs der Achse enthält, in welcher sich der gleitende Block bewegt, um das Ausmaß der Rückziehung der Faser bis zu einem voreingerichteten Wert einzustellen, wenn die Sonde (5) an den Blöcken angeordnet ist.

11. Vorrichtung nach einem der vorhergehenden Ansprüche, außerdem enthaltend einen Schutzbehälter für die Sonde (5), bestehend aus einem ersten rohrartigen Element (50) zum Beinhalten des Teils der SPME-Faser, der sich von dem Flansch (13) erstreckt, einem zweiten rohrartigen Element (55), in das das erste rohrartige Element (50) eingreift, um den Flansch dazu zu bringen, um gegen den Boden des zweiten rohrartigen Elementes (55) anzuliegen, und einem dritten rohrartigen Element (51), in das das zweite rohrartige Element (55) wenigstens teilweise eingreift, so dass sich die Nadel (8) innerhalb des dritten rohrartigen Elementes (51) erstreckt, wobei Schlitze (54) an dem dritten rohrartigen Element ausgebildet sind, um sein Inneres mit der äußeren Umgebung kommunizieren zu lassen, die die Substanz enthält, die an der Faser absorbiert wird.

## Revendications

1. Une sonde pour micro-extraction en phase solide (SPME) comportant une fibre (9) pour SPME logée de façon coulissante dans une aiguille (8), **caractérisée en ce que** ladite fibre possède, à une extrémité, un élément de connexion ferromagnétique (10,12) et que l'extrémité de ladite aiguille dans laquelle ladite est engagée ladite fibre comporte une collerette (13) réalisée en un matériau ferromagnétique.

2. La sonde selon la revendication 1, où ledit élément de connexion sur ladite fibre comporte un connecteur plastique (10) fixé à une extrémité de ladite fibre (9) et un capot adaptateur (12) réalisé en un matériau ferromagnétique, ledit capot étant fixé sur ledit connecteur (10).

3. La sonde selon l'une des revendications 1 et 2, où ladite collerette ferromagnétique (13) sur ladite aiguille est fixée à un anneau entretoise (11) situé à l'extrémité de ladite aiguille au moyen d'un manchon (14) qui lui est coaxial.

4. La sonde selon l'une des revendications 1 à 3, où ladite collerette (13) présente une discontinuité radiale latérale (13a) pour permettre le passage de ladite aiguille.

5. La sonde selon la revendication 4, où ladite discontinuité radiale latérale présente une ouverture d'une section élargie (31).

6. Un appareil d'échantillonnage automatique par micro-extraction en phase solide (SPME) utilisant une sonde (5) comme décrite dans les revendications 1-5 comprenant une fibre (9) pour SPME montée coulissante à l'intérieur d'une aiguille (8) de façon qu'elle puisse être exposée à un milieu à partir duquel elle peut absorber un analyte ayant un intérêt, puis à l'intérieur d'un injecteur (7) pour chromatographie en phase gazeuse pour la désorption du dit analyte, une extrémité de la fibre (9) pour SPME dans ladite sonde étant équipée d'un élément de connexion ferromagnétique (10,12) et l'extrémité de ladite aiguille dans laquelle ladite fibre est engagée ayant une collerette ferromagnétique (13), ledit l'appareil comprenant un bras (2) déplaçable selon un programme préétabli, avec une tête (2a) portant un support sensiblement tubulaire (15) avec une chambre (19) pour ladite sonde (5) et un plongeur (17) dans ledit support pour actionner la sortie en saillie et le retrait d'au moins une partie de ladite fibre (9), ledit appareil comprenant également une unité de stockage (4) de tubes à essais contenant des échantillons à analyser et/ou des sondes avec des fibres pour SPME déjà exposées, et optionnellement aussi des fibres qui sont prévues pour être exposées, accessibles par ledit bras mobile (2), ledit appareil étant **caractérisé en ce que**:
- le plongeur (17) dans ledit support (15) comporte, à l'extrémité interagissant avec ladite fibre, au moins un aimant (20), et un ou plusieurs autres aimants (22) prévus à l'extrémité libre du dit support ;
- ladite tête (2a) comporte au moins un bloc guide (29a, 29b) pour loger de façon coulissante ladite aiguille (8) quand ladite sonde (5) est engagée dans ledit support (15), ledit bloc guide (29b) étant agencé sous l'extrémité libre du dit support et équipé avec au moins un aimant (33) à son extrémité inférieure ;
- il est prévu une console de transfert intermédiaire (6) accessible par ledit bras mobile (2) et appropriée pour soutenir verticalement une sonde (5), et comprenant des moyens (25, 26) pour engager ledit connecteur ferromagnétique sur la fibre SPME et ladite collerette ferromagnétique sur ladite aiguille ;
- la tête (2a) du dit bras mobile (2) étant apte à prélever ladite sonde (5) selon un premier mode de prélèvement, en amenant l'extrémité du dit bloc guide (29b) contre ledit élément de connexion ferromagnétique (10,12) sur la fibre pour SPME, ou selon un second mode de prélèvement, en amenant l'extrémité du dit plongeur (17) et l'extrémité libre du dit support (15) respectivement contre ledit élément de connexion (10,12) situé sur la fibre pour SPME et la collerette (13) située sur l'aiguille, où ladite la sonde (5) est placée à l'intérieur de la chambre (19) du dit support (15) avec l'aiguille (8) s'étendant axialement à partir de celui-ci ;
- ledit premier mode de prélèvement étant utilisé pour transférer ladite sonde (5) à partir de ladite unité de stockage (4) jusqu'à ladite console de transfert intermédiaire (6) et vice versa, tandis que le second mode de prélèvement est utilisé pour transférer ladite sonde (5) à partir de ladite console de transfert intermédiaire (6) jusqu'au dit injecteur pour chromatographie en phase gazeuse (7) ou jusqu'à ladite unité de stockage (4) pour absorber un analyte, en conséquence de mouvements correspondants du dit bras mobile (2).

7. L'appareil selon la revendication 6, où ladite console de transfert intermédiaire (6) comporte un montant (24) avec deux éléments de support (25, 26) s'étendant à partir de lui, avec des sièges coaxiaux respectifs (25a, 26a) dans lesquels sont engagés latéralement l'élément de connexion (10,12) sur la fibre pour SPME et la collerette (13) sur l'aiguille, chacun des dits sièges ayant une discontinuité radiale appropriée pour le passage respectivement de ladite fibre pour SPME et de ladite aiguille.

8. L'appareil selon la revendication 7, où une paire de bras parallèles (27) s'étendent à partir du dit montant (24) entre lesdits éléments de support (25, 26), lesdits bras étant agencés pour buter sur ladite collerette de ladite aiguille afin d'exercer sur elle une force supérieure à la force magnétique de l'attraction exercée par l'aimant (22) sur l'extrémité libre du dit support (15) quand ladite tête (2a) est soulevée après que l'extrémité magnétique (20) du plongeur (17) ait été séparée du dit élément de connexion (10,12) situé sur la fibre.

9. L'appareil selon l'une des revendications 6 et 7, où ladite collerette (13) de ladite aiguille comporte une fente radiale latérale (13a) et où une dent de référence (32) est agencée sur l'élément de support respectif (25) de ladite console de transfert intermédiaire (6), sur lequel est formé le siège (25a) pour ladite collerette, qui s'engage dans ladite fente, dans ledit premier mode de prélèvement ledit bloc guide (29b) étant séparé du dit élément de connexion (10,12) par ladite tête (2a) s'éloignant orthogonalement de ladite sonde (5).

10. Appareil selon l'une quelconque des revendications précédentes, comprenant en outre un dispositif pour ajuster l'ampleur du retrait de la fibre (9) de l'intérieur de ladite aiguille (8), comprenant une plaque support (40), un premier bloc (41) fixé sur ladite plaque avec un siège (42) pour recevoir ledit élément de connexion (10,12) de la fibre et un second bloc (43) monté coulissant le long de ladite plaque support avec un siège (44) pour recevoir ladite collerette (13) située sur ladite aiguille, ladite plaque support comportant également une échelle graduée (47) le long de l'axe selon lequel se déplace ledit bloc coulissant pour ajuster l'ampleur du retrait de ladite fibre à une valeur préétablie quand ladite sonde (5) est placée sur lesdits blocs.

11. L'appareil selon l'une quelconque des revendications précédentes, comprenant également un récipient protecteur pour ladite sonde (5), consistant en un premier élément tubulaire (50) pour contenir la partie de fibre pour SPME s'étendant à partir de ladite collerette (13), un deuxième élément tubulaire (55) dans lequel s'engage ledit premier élément tubulaire (50) de façon à obliger ladite collerette à rester contre le fond du deuxième élément tubulaire (55), et un troisième élément tubulaire (51) dans lequel s'engage au moins partiellement ledit deuxième élément tubulaire (55) de façon que ladite l'aiguille (8) s'étende dans ledit troisième élément tubulaire (51), des fentes (54) étant réalisées sur ledit troisième élément tubulaire pour mettre son intérieur en communication avec l'environnement extérieur contenant la substance devant être absorbée sur la fibre.
